# EUROPEAN PATENT SPECIFICATION

(11) **EP 2 172 994 B1**
(45) Date of publication and mention of the grant of the patent: **04.07.2012**
(21) Application number: 09012377.9
(22) Date of filing: 30.09.2009
(51) Int. Cl.: H01R 11/28, H01M 2/20, H01M 2/10

(54) **Battery module having electrochemical cells with integrally formed terminals**
Batteriemodul mit elektrochemischen Zellen mit integral geformten Endstücken
Module de batterie doté de cellules électrochimiques avec des terminaux formés intégralement

(30) Priority: 01.10.2008 US 101985 P; 23.01.2009 US 146994 P
(43) Date of publication of application: 07.04.2010
(73) Proprietor: Johnson Controls Saft Advanced Power Solutions LLC, Wilmington DE 19801-1120 (US)
(72) Inventor: Dougherty, Thomas J., WI 53188 Waukesha (US); Fuhr, Jason, WI 53089 Sussex (US); Trester, Dale B., WI 53222 Milwaukee (US); Houchin-MIller, Gary P., WI 53217 Milwaukee (US)
(74) Representative: Kröncke, Rolf

(56) References cited:
- EP-A1- 1 109 237
- WO-A1-2008/074034
- WO-A2-2008/098193

## Description

### PRIOR ART

EP 1109237 is directed to a module configuration and discloses a cell holding board 20 that includes a first side 21 and a second side 23 that is opposite to the first side 21. EP 1109237 also discloses that the first side 21 of the holding board 20 includes a plurality of cavities 22 and 22' where the cavities 22...accommodate the structure on the negative end of an electrochemical cell 4 and the cavities 22'... accommodate...the positive sides of the cells. Further, EP 1109237 discloses that the second side of the holding board 20 includes recesses 42 and 44 for accommodating the bus connectors 70 and 76, respectively.
PCT Publication No. WO 2008/074034 is directed to a battery module and discloses an upper tray 30 having a lower surface 60 that includes sockets 64 that receive cells 26 and a top surface 62 that includes walls 68 that receive buss bars 24.
PCT Publication No. WO 2008/098193 is directed to a buss bar for batteries and discloses cells 120 that are received in a series of interlocking sleeves 140.

### BACKGROUND

The present application relates generally to the field of batteries and battery modules. More specifically, the present application relates to batteries and battery modules that may be used in vehicle applications to provide at least a portion of the motive power for the vehicle.

Vehicles using electric power for all or a portion of their motive power (e.g., electric vehicles (EVs), hybrid electric vehicles (HEVs), plug-in hybrid electric vehicles (PHEVs), and the like, collectively referred to as "electric vehicles") may provide a number of advantages as compared to more traditional gas-powered vehicles using internal combustion engines. For example, electric vehicles may produce fewer undesirable emission products and may exhibit greater fuel efficiency as compared to vehicles using internal combustion engines (and, in some cases, such vehicles may eliminate the use of gasoline entirely, as is the case of certain types of PHEVs).

As electric vehicle technology continues to evolve, there is a need to provide improved power sources (e.g., battery systems or modules) for such vehicles, For example, it is desirable to increase the distance that such vehicles may travel without the need to recharge the batteries. It is also desirable to improve the performance of such batteries and to reduce the cost associated with the battery systems.

One area of improvement that continues to develop is in the area of battery chemistry. Early electric vehicle systems employed nickel-metal-hydride (NiMH) batteries as a propulsion source. Over time, different additives and modifications have improved the performance, reliability, and utility of NiMH batteries.

More recently, manufacturers have begun to develop lithium-ion batteries that may be used in electric vehicles. There are several advantages associated with using lithium-ion batteries for vehicle applications. For example, lithium-ion batteries have a higher charge density and specific power than NiMH batteries. Stated another way, lithium-ion batteries may be smaller than NiMH batteries while storing the same amount of charge, which may allow for weight and space savings in the electric vehicle (or, alternatively, this feature may allow manufacturers to provide a greater amount of power for the vehicle without increasing the weight of the vehicle or the space taken up by the battery system).

It is generally known that lithium-ion batteries perform differently than NiMH batteries and may present design and engineering challenges that differ from those presented with NiMH battery technology. For example, lithium-ion batteries may be more susceptible to variations in battery temperature than comparable NiMH batteries, and thus systems may be used to regulate the temperatures of the lithium-ion batteries during vehicle operation. The manufacture of lithium-ion batteries also presents challenges unique to this battery chemistry, and new methods and systems are being developed to address such challenges.

It would be desirable to provide an improved battery module and/or system for use in electric vehicles that addresses one or more challenges associated with NiMH and/or lithium-ion battery systems used in such vehicles. It also would be desirable to provide a battery module and/or system that includes any one or more of the advantageous features that will be apparent from a review of the present disclosure.

### SUMMARY

One exemplary embodiment relates to a battery module including a plurality of electrochemical cells. Each of the cells comprises a housing having a longitudinal axis and a lid coupled to the housing. The lid includes a member configured to act as a first terminal for the cell. At least a portion of the member extends away from the housing in a direction generally perpendicular to the longitudinal axis. The battery module further includes a structure configured to receive the plurality of cells and includes a plurality of depressions. Each of the plurality of depressions is configured to receive at least a portion of the member such that the member is properly aligned for conductive coupling with a terminal of an adjacent cell.

One exemplary embodiment relates to a method of producing a battery module including providing a structure. The method also includes providing the plurality of electrochemical cells to the structure such that each of the plurality of depressions of the structure receive the member of each of the plurality of electrochemical cells such that the member is properly aligned for conductive coupling with a terminal of an adjacent cell. The method further includes coupling the member of one of the plurality of electrochemical cells to the terminal of the adjacent cell.

### BRIEF DESCRIPTION OF THE FIGURES

FIG. 1 is a perspective view of a vehicle having a battery system according to an exemplary embodiment.

FIG. 2 is a schematic cutaway view of a hybrid electric vehicle according to an exemplary embodiment.

FIG. 3 is a cutaway perspective view of a battery system according to an exemplary embodiment.

FIG. 4 is a perspective view of a first electrochemical cell coupled to a second electrochemical cell with a bus bar according to an exemplary embodiment.

FIG. 5 is a perspective view of a bus bar coupled to a terminal of an adjacent electrochemical cell according to an exemplary embodiment.

FIG. 6 is a perspective view of a portion of a battery module having a first electrochemical cell coupled to a second electrochemical cell with the bus bar as shown in FIG. 5.

FIG. 7 is a cutaway perspective view of a portion of an electrochemical cell shown without electrodes according to an exemplary embodiment.

FIG. 8 is an exploded view of the electrochemical cell as shown in FIG. 7.

FIG. 9 is a perspective view of a lid having an integral bus bar coupled to a terminal according to an exemplary embodiment

FIG. 10 is a perspective view of the lid as shown in FIG. 9.

FIG. 11 is a perspective view of a battery module according to an exemplary embodiment.

FIG. 12 is a perspective view of the battery module as shown in FIG. 11 with an upper tray removed.

FIG. 13 is a perspective view of a plurality of electrochemical cells provided in an upper tray according to an exemplary embodiment.

FIG. 14 is a perspective view of a plurality of electrochemical cells provided in an upper tray according to an exemplary embodiment.

FIG. 15 is a top view of the upper tray as shown in FIG. 11.

FIG. 16 is a perspective view of the upper tray as shown in FIG. 11.

FIG. 17 is a bottom view of the upper tray as shown in FIG. 11.

FIG. 18 is a bottom perspective view of the upper tray as shown in FIG. 11.

### DETAILED DESCRIPTION

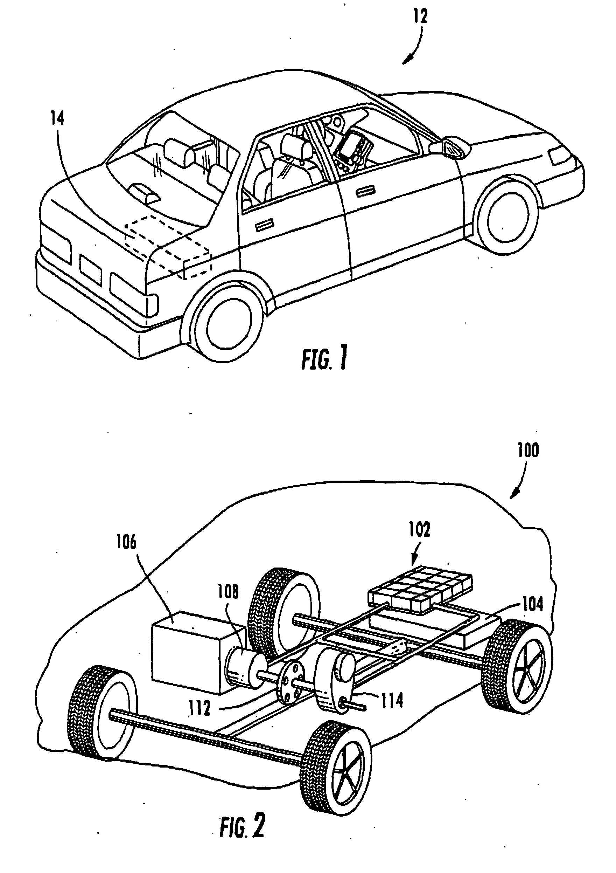

Referring to FIG. 1, a vehicle 12 is shown according to an exemplary embodiment and includes a battery system 14. The size, shape, configuration, and location of the battery system 14 and the type of vehicle 12 may vary according to various exemplary embodiments. For example, while the vehicle 12 in FIG. 1 is shown as an automobile, according to various exemplary embodiments, vehicle 12 may comprise a wide variety of differing types of vehicles including, among others, motorcycles, buses, recreational vehicles, boats, and the like. According to an exemplary embodiment, the vehicle 12 has a battery system 14 for providing all or a portion of the motive power for the vehicle 12. Such a vehicle can be an electric vehicle (EV), a hybrid electric vehicle (HEV), a plug-in hybrid electric vehicle (PHEV), or other type of vehicle using electric power for propulsion (collectively referred to as "electric vehicles").

Although the battery system 14 is illustrated in FIG. 1 as being positioned in the trunk or rear of the vehicle 12, according to other exemplary embodiments, the location of the battery system 14 may differ. For example, the position of the battery system 14 may be selected based on the available space within the vehicle 12, the desired weight balance of the vehicle 12, the location of other components used with the battery system 14 (e.g., battery management systems, vents or cooling devices, etc.), and a variety of other considerations.

FIG. 2 illustrates a cutaway schematic view of a vehicle 100 provided in the form of a PHEV according to an exemplary embodiment. A battery system 102 is provided toward the rear of the vehicle 100 proximate to a fuel tank 104 (battery system 102 may be provided immediately adjacent to the fuel tank 104 or may be provided in a separate compartment in the rear of the vehicle 100 (e.g., a trunk) or may be provided elsewhere in the vehicle 100). An internal combustion engine 106 is provided for times when the vehicle 100 utilizes gasoline power to propel itself. An electric motor 108, a power split device 112, and a generator 114 are also provided as part of the vehicle drive system of vehicle 100. The vehicle 100 may be powered or driven by just the battery system 102, by just the engine 106, or by both the battery system 102 and the engine 106.

It should be noted that other types of vehicles and configurations for the vehicle electrical system may be used according to other exemplary embodiments, and that the schematic illustration of FIG. 2 should not be considered to limit the scope of the subject matter described in the present application.

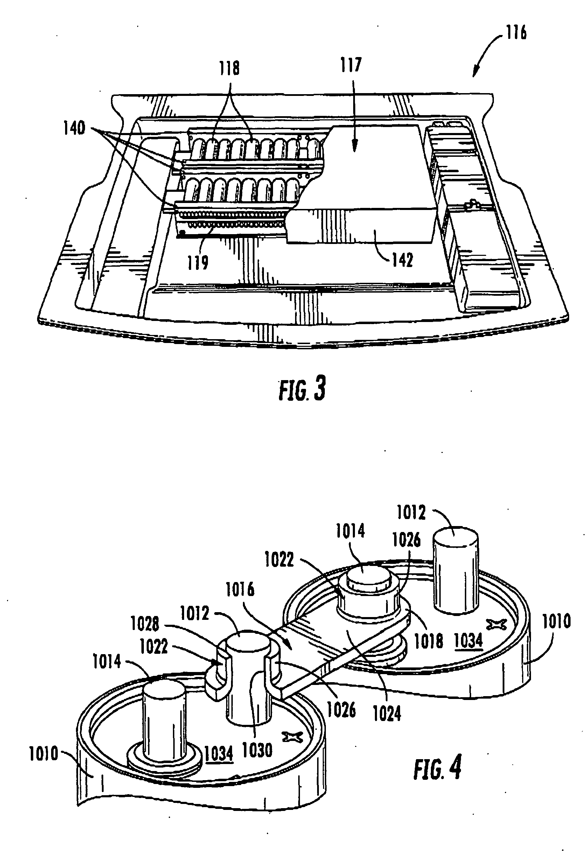

Referring to FIG. 3, a battery system 116 is shown according to an exemplary embodiment and includes a battery module 117 containing electrochemical cells or batteries 118. According to an exemplary embodiment, the battery module 117 includes features or components for connecting the electrochemical cells 118 to each other and/or to other components of the vehicle electrical system, and also for regulating the electrochemical cells 118 and other features of the battery system 116. For example, the battery system 116 may include features that are responsible for monitoring and controlling the electrical performance of the battery system 116, managing the thermal behavior of the battery system 116, containment and/or routing of effluent (e.g., gases that may be vented from a cell 118), and other aspects of the battery system 116.

According to an exemplary embodiment, the battery module 117 includes a plurality of electrochemical cells or batteries 118 (e.g., lithium-ion cells, nickel-metal-hydride cells, lithium polymer cells, etc., or other types of electrochemical cells now known or hereafter developed). According to an exemplary embodiment, the electrochemical cells 118 are generally cylindrical lithium-ion cells configured to store an electrical charge.

According to other exemplary embodiments, cells 118 could have other physical configurations (e.g., oval, prismatic, polygonal, etc.). The capacity, size, design, and other features of the cells 118 may also differ from those shown according to other exemplary embodiments. According to an exemplary embodiment, the cells 118 each have at least one terminal 119 located at an end thereof (e.g., as shown in FIG. 3). According to another exemplary embodiment, the cells each have two terminals (e.g., as shown in FIG. 4, a first or positive terminal 1012, and a second or negative terminal 1014) located at an end thereof.

According to various exemplary embodiments, the size, shape, and location of the battery module 117 or battery system 116, the type of vehicle 100, the type of vehicle technology (e.g., EV, HEV, PHEV, etc.), and the battery chemistry, among other features, may differ from those shown or described.

Although illustrated in FIG. 3 as having a particular number of electrochemical cells 118, it should be noted that according to other exemplary embodiments, a different number and/or arrangement of electrochemical cells 118 may be used depending on any of a variety of considerations (e.g., the desired power for the battery system 116, the available space within which the battery system 116 must fit, etc.).

According to an exemplary embodiment, a series of members or elements in the form of trays 140 or similar structures are provided to contain the various cells 118 in relation to each other. The trays 140 may be made of a polymeric material or other suitable materials (e.g., electrically insulative materials). The trays 140 may also include features to provide spacing of the cells 118 away from the surface of the trays 140 and/or from adjacent cells 118. A housing or cover 142 and a base plate (not shown) may be provided to partially or completely surround or enclose the cells 118 and trays 140.

While FIG. 3 shows an exemplary embodiment of a battery module 117, it should be understood that the battery module 117 is not limited to any particular arrangement as will be appreciated by those reviewing this disclosure. For instance, while the battery module 117 shown in FIG. 3 is shown with horizontally oriented cells 118 arranged back-to-back in two banks or groups by parallel frame members (i.e., trays 140), it should be understood that the battery module 117 may have many different configurations. For example, the cells 118 may also be generally vertical, be several separate groups, or arranged in other configurations. Furthermore, different numbers and types (e.g., nickel-metal-hydride, etc.) of cells 118 may be used. The cover 142 may include features (e.g., sidewalls, etc.) that are intended to receive and arrange the cells 118.

Referring now to FIG. 4, a method of connecting the terminals 1012, 1014 of adjacent cells 1010 is shown according to an exemplary embodiment. Each of the cells 1010 are electrically coupled to one or more other cells 1010 or other components of the battery system 116 (shown, e.g., in FIG. 3) using connectors provided in the form of bus bars 1016 or similar elements. For example, FIG. 4 shows two cells 1010 coupled together with a bus bar 1016 according to an exemplary embodiment. A portion of the bus bar 1016 is shown as a broken view to show the interface between the bus bar 1016 and the terminal 1012. The bus bar 1016 is a metallic member (e.g., copper, copper alloy, aluminum, aluminum alloy, etc.) that couples the negative terminal 1014 of a first cell 1010 to the positive terminal 1012 of a second cell 1010. The bus bar 1016 includes a first end 1018 that is coupled to the negative terminal 1014 of the first cell 1010 (e.g., by an interference fit, by welding, etc.) and a second end 1020 that is coupled to the positive terminal 1012 of a second cell 1010 (e.g., by an interference fit, by welding etc.).

The first end 1018 and the second end 1020 of the bus bar 1016 each include a projection 1022 (e.g., protruding ridge, lip, flange, extension, etc.) that is configured to substantially surround the terminal 1012, 1014 of a cell 1010. The projection 1022 may be cast or formed by a mechanical process such as a stamping operation, a punching operation, or an extrusion operation. The mechanical process causes the projection 1022 to extend outward from the top surface 1024 of the bus bar 1016. The projection 1022 forms a generally vertical wall 1026 that defines an aperture 1028 that is configured to receive the terminal 1012, 1014 of the projection 1022.

According to an exemplary embodiment, the aperture 1028 has a diameter that is smaller than the diameter of the terminal 1012, 1014 so that the bus bar 1016 is coupled to the cell 1010 with an interference fit when the terminal 1012,1014 is received by the aperture 1028. The bus bar 1016 is assembled with the cells 1010 by first heating the bus bar 1016 (e.g., by induction heating, by an oven, by a flame or heating element, etc.). According to an exemplary embodiment, the heating of the bus bar 1016 occurs as part of an assembly line process where the bus bars 1016 being are heated (e.g., in an oven) in the assembly line and directly assembled with the cells 1010.

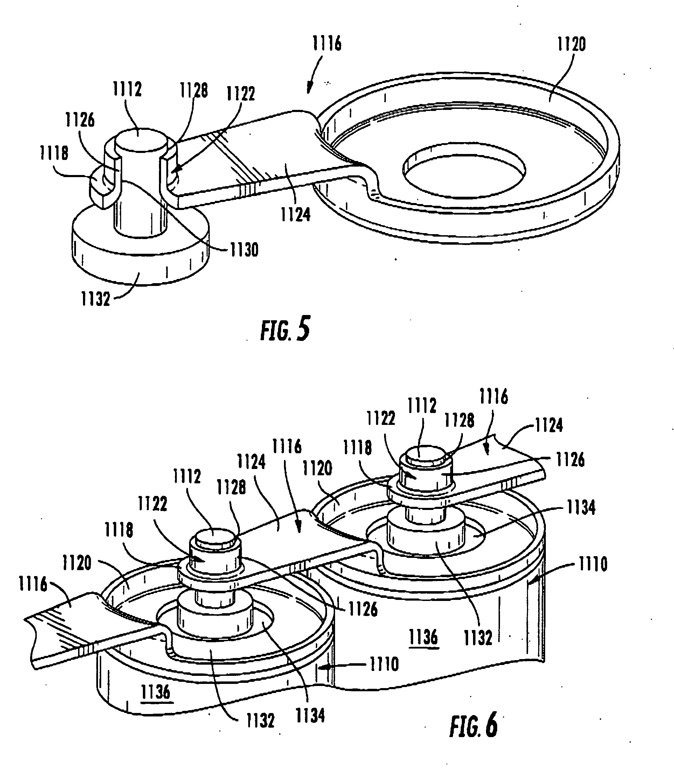

According to an exemplary embodiment, the bus bar 1016 is heated to a temperature sufficient to expand the material of the bus bar 1016, widening the aperture 1028 formed by the projection 1022 and allowing the terminal 1012, 1014 to be received by the aperture 1028 in the bus bar 1016. According to various exemplary embodiments, these temperatures may vary depending on the material properties of the bus bars 1016 (e.g., coefficient of thermal expansion). As the bus bar 1016 cools, the diameter of the aperture 1028 shrinks, forming an interference fit with the terminal 1012,1014. An insulator 1132 (e.g., as shown in FIG. 5) may be provided below the bus bar 1016 and around the terminal 1012, 1014 to reduce the chance of inadvertent contact between the bus bar 1016 and the lid or cover 1034 of the cell 1010.

The bus bar 1016 may be further coupled to the cell 1010 with a welding operation such as an ultrasonic welding operation, a laser welding operation, or a resistance welding operation. According to an another exemplary embodiment, the bus bar 1016 may only be welded to the terminals 1012,1014 of the cells 1010 instead of being provided with an interference fit and welded to the terminals 1012, 1014 of the cells 1010. According to an another exemplary embodiment, the bus bar 1016 may only be press fit to the terminals 1012, 1014 of the cells 1010 instead of being welded to the terminals 1012, 1014 of the cells 1010.

FIGS. 5-6 show a bus bar 1116 according to another exemplary embodiment coupled to a terminal 1112 of a cell 1110. A portion of the bus bar 1116 is shown as a broken view to show the interface between the bus bar 1116 and the terminal 1112. The bus bar 1116 is a metallic member (e.g., copper, copper alloy, aluminum, aluminum alloy, etc.) that couples a first cell 1110 to a second cell (e.g., as shown in FIG. 6). The bus bar 1116 includes a first end 1118 that is coupled to a terminal 1112 of the first cell 1110 (e.g., by an interference fit, by welding, etc.) and a second end 1120 that is coupled to the housing 1136 of the second cell 1110 (e.g., by a press fit, by an interference fit, by welding, etc.). The first end 1118 of the bus bar 1116 shown in FIG. 5 is similar to the first end 1018 of the bus bar 1016 shown in FIG. 4. However, the second end 1120 of the bus bar 1116 shown in FIG. 5 is configured to be coupled to the housing 1136 of a second adjacent cell 1110 and to act as a cover for the second cell.

The first end 1118 of the bus bar 1116 includes a projection 1122 (e.g., protruding ridge, lip, flange, extension, etc.) that is configured to substantially surround the terminal 1112 of a first cell 1110. The projection 1122 may be cast or may be formed by a mechanical process such as a stamping operation, a punching operation, or an extrusion operation. The mechanical process causes the projection 1122 to extend outward from a top surface 1124 of the bus bar 1116. The projection 1122 forms a generally vertical wall 1126 that defines an aperture 1128 that is configured to receive the terminal 1112 of the cell 1010. In other words, the terminal 1112 is received in the aperture 1128 defined by the projection 1122 of the bus bar 1116 such that contact is made between the terminal 1112 and an inner surface 1130 of the projection 1122.

FIG. 6 shows a portion of a battery module including two cells 1110 coupled together with the bus bar 1116 of FIG. 5. The cells 1110 are generally cylindrical bodies with a top or first surface 1134 having a terminal 1112 (e.g., a negative terminal, a positive terminal) that extends generally upward from the top surface 1134. The terminal 1112 is electrically coupled to a first electrode (not shown) inside the housing 1136 of the cell 1110 (e.g., a negative electrode, a positive electrode). However, the terminal 1112 is electrically insulated from the housing 1136 itself (e.g., by an insulator 1132). The housing 1136 of the cell 1110, including the top surface 1134 of the cell 1110, is electrically coupled to a second electrode (not shown) inside the housing 1136 of the cell 1010 (e.g., a positive electrode, a negative electrode).

The bus bar 1116 is coupled to the cells 1110 by first coupling the second end 1120 of the bus bar 1116 to the top surface 1134 of the of the second cell 1110. According to an exemplary embodiment, the second end 1120 of the bus bar 1116 is press fit into the top of the housing 1136 of the second cell 1110 and then welded (e.g., ultrasonic, laser, resistance, etc.) to form a cover for the cell 1110 (i.e., the cover includes an extension or flange that acts as a bus bar or terminal for coupling to an adjacent cell). According to another exemplary embodiment, the second end 1120 of the bus bar 1116 is larger than the diameter of the top of the second cell 1110 and is coupled to the top of the second cell 1110 with an interference fit. The second end 1120 of the bus bar 1116 is shrunk (e.g., reduced in size, made smaller, etc.) by a cooling process (e.g., using liquid nitrogen). The second end 1120 of the bus bar 1116 is then placed into the open end of the top of the second cell 1110 and allowed to return to room temperature. The second end 1120 of the bus bar 1116 may then be further coupled to the cell 1110 by a welding operation such as an ultrasonic welding operation, a laser welding operation, or a resistance welding operation.

The first end 1118 of the bus bar 1116 is then coupled to the terminal 1112 of the first cell 1110. According to an exemplary embodiment, the first end 1118 of the bus bar 1116 is welded (e.g., ultrasonic, laser, resistance, etc.) to the terminal 1112 of the first cell 1110. According to another exemplary embodiment, the first end 1118 of the bus bar 1116 is press fit to the terminal 1112 of the first cell 1110. According to another exemplary embodiment, the aperture 1128 in the first end 1118 of the bus bar 1116 has a diameter that is smaller than the diameter of the terminal 1112 so that the first end 1118 of the bus bar 1116 is coupled to the terminal 1112 of the first cell 1110 with an interference fit. The first end 1118 of the bus bar 1116 is heated (e. g., by placing the first end 1118 near a heating element or a flame). Heating the first end 1118 of the bus bar 1116 expands the metal, widening the aperture 1128 formed by the projection 1122 and allowing the terminals 1112 to be received in the aperture 1128 in the first end 1118 of the bus bar 1116. As the bus bar 1116 cools, the diameter of the aperture 1128 shrinks, forming an interference fit with the terminal 1112. An insulator 1132 (e.g., as shown in FIG. 6) may be provided below the bus bar 1116 and around the terminal 1112 to reduce the chance of inadvertent contact between the bus bar 1116 and the housing 1136 of the cell 1010. The bus bar 1116 may then be further coupled to the terminal 1112 of the cell 1010 with a welding operation such as an ultrasonic welding operation, a laser welding operation, or a resistance welding operation.

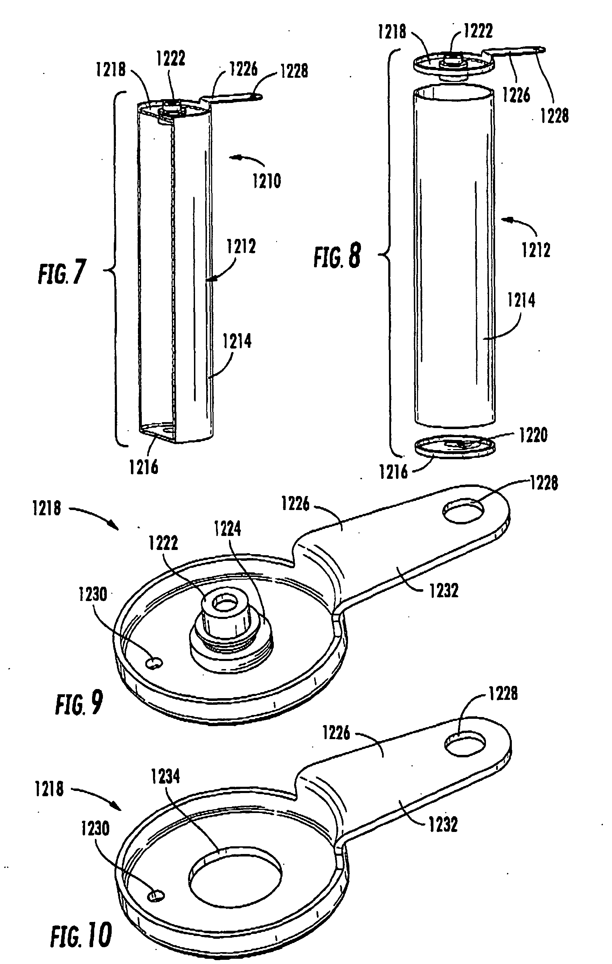

Referring now to FIGS. 7-8, a cell can or housing 1212 (e.g., a container, casing, etc.) for an electrochemical cell 1210 is shown according, to an exemplary embodiment. The housing 1212 is configured to receive or house a cell element (e.g., a wound cylindrical cell element) that is not shown. According to an exemplary embodiment, the housing 1212 comprises a three-piece structure, comprising a main body 1214 (that may, e.g., be made from an aluminum tube or tubing), a first cover or bottom 1216, and a second cover or lid 1218 that includes a flange (e.g., a tab, flap, projection, extension, protrusion, projection, lip, overhang, protuberance, etc.) that acts as a bus bar or terminal for coupling the cell 1210 to a terminal of an adjacent cell.

As shown in FIG. 8, the three-piece housing 1212 provides for a flexible design that may be varied (e.g., in length) to provide for various sizes and capacities of cell elements. For example, a different length main body 1214 may be used with the same bottom 1216 and lid 1218. Additionally, internal connections (e.g., current collectors, etc.) may be changed for different applications without affecting the design of the external interface (e.g., the lid 1218, the bus bars 1226, etc.) of the module that the cells 1210 are provided in. Furthermore, this type of separate component design allows for lower cost tooling for development and higher efficiencies in economies of scale in that the same design for the bottom 1216 and the lid 1218 may be used interchangeably with different lengths of the main body 1214.

According to an exemplary embodiment, the separate components (i.e., the main body 1214, bottom 1216, and lid 1218) are easier to clean and handle than previous designs. For example, the main body 1214, bottom 1216, and lid 1218 may be cleaned separately and then assembled together. Previous designs having the bottom or the lid integral with the main body made it difficult to clean the inside of the main body and/or the bottom or lid. Having separate components allows for full accessibility to all of the components of the housing 1212.

Referring now to FIG. 8, the bottom 1216 may have an integral vent feature 1220 according to an exemplary embodiment. The vent feature 1220 may be configured to separate or deploy from the bottom 1216 if the pressure inside the housing 1212 reaches a predetermined amount. Various sized vents 1220 may be used with the bottom 1216, allowing different internal pressures to be obtained depending on the design (e.g., size) of the vent 1220 used. Additionally, the various sized vents 1220 may be interchanged with different sized housings 1212, dependent upon the needs of the application. According to an exemplary embodiment, the bottom 1216 is coupled (e.g., by a welding process, such as laser welding) to a lower portion of the housing 1212.

Referring to FIGS. 9-10, the cover 1218 or lid for the housing 1212 is shown according to an exemplary embodiment. The lid 1218 includes a first terminal 1222 (e.g., a positive terminal) that may be provided, for example, in the center of the lid 1218. The first terminal 1222 is insulated from the lid 1218 by tube use of an insulating material or insulating device shown as an insulator 1224. The first terminal 1222 may be coupled to an electrode (e.g., a positive electrode) of the cell element (not shown) with a current collector (not shown). According to an exemplary embodiment, the lid 1218 is coupled (e.g., by a welding process, such as laser welding) to an upper portion of the housing 1212.

Still referring to FIGS. 9-10, the lid 1218 also comprises a member shown as a flange (e.g., a tab, flap, projection, extension, protrusion, projection, lip, overhang, protuberance, etc.) that may act as a terminal or bus bar 1226 for the cell 1210. According to an exemplary embodiment, the bus bar 1226 is integral with the lid 1218 (i.e., the bus bar 1226 and lid 1218 are a single unitary body). Having the bus bar 1226 integral with the lid 1218 reduces the overall component count of the system. Additionally, the number of fasteners (not shown) required (e.g., to couple the bus bars 1226 to the terminals 1222) is reduced. Furthermore, the overall system cost may be reduced by eliminating or reducing the amount of copper used by having integral bus bars 1226.

As shown in FIGS. 9-10, the bus bar 1226 extends out and away from the lid 1218. According to an exemplary embodiment, the bus bar 1226 is at a height that is different (i.e., higher) than the height of the lid 1218, allowing the bus bar 1226 to be placed over (i.e., on top of) a terminal 1222 of an adjacent cell 1210. The bus bar 1226 is configured with an aperture 1228 at an end of the of the bus bar 1226. According to an exemplary embodiment, the aperture 1228 is configured to allow a fastener (not shown) to be placed through the aperture 1228 in order to couple the bus bar 1226 to a terminal 1222 of an adjacent cell 1210.

According to another exemplary embodiment, the lid 1218 may also comprise an aperture or hole shown as fill hole 1230. Fill hole 1230 is configured to allow a substance (e.g., electrolyte) to be placed in the cell 1210 after the cell 1210 is assembled. According to another exemplary embodiment, the lid may also comprise an aperture or hole 1234 (e.g., as shown in FIG. 10) configured to receive the first terminal 1222 and insulator 1224.

According to another exemplary embodiment, the bus bar 1226 may function as a second terminal 1232 (e.g., a negative terminal) of the cell 1210 due to the fact that the bus bar 1226 may be electrically connected to an electrode (e.g., a negative electrode) of the cell element (not shown). The bus bar 1226, being integral with the lid 1218, may be connected to the electrode by the lid 1218 being electrically connected to the main body 1214 of the housing 1212. The main body 1214 of the housing 1212 is electrically connected to the bottom 1216 of the housing 1212, which in turn is then electrically connected to the electrode of the cell element, completing the connection from the bus bar 1226 to the electrode.

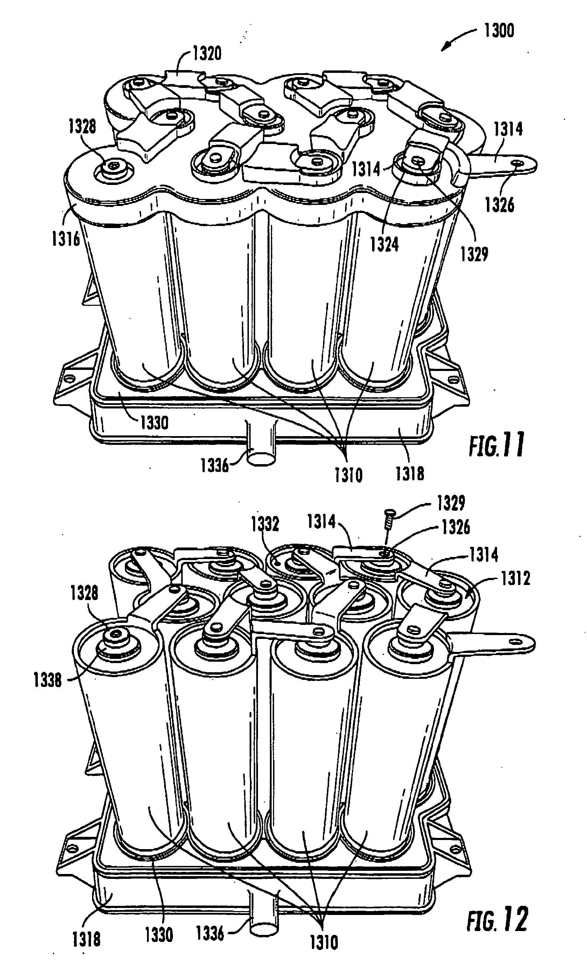

Referring now to FIGS. 11-14, a battery module 1300 utilizing cells 1310 having lids 1312 with integral terminals or bus bars 1314 is shown according to an exemplary embodiment. The battery module 1300 may be electrically coupled with other battery modules 1300 to form a battery system (not shown) or may be used independently to form its own battery system. The battery system may include other features (not shown) that are responsible for monitoring and controlling the electrical performance of the system, managing the thermal behavior of the system, containment and/or routing of effluent (e.g., gases that may be vented from a cell 1310), and other aspects of the battery module 1300 or battery system.

As shown in FIG. 11, the battery module 1300 includes a plurality of electrochemical cells 1310 each having a flange (e.g., a tab, flap, projection, extension, protrusion, projection, lip, overhang, protuberance, etc.) shown as an integral terminal or bus bar 1314 formed in the lid 1312 of the cell 1310, a first structure or upper tray 1316, and a second structure or the lower tray 1318. The plurality of cells 1310 are provided in between the upper tray 1316 and the lower tray 1318. Although illustrated in FIG.11 as having a particular number of electrochemical cells 1310, it should be noted that according to other exemplary embodiments, a different number and/or arrangement of electrochemical cells 1310 may be used depending on any of a variety of considerations (e.g., the desired power for the battery module 1300, the available space within which the battery module 1300 must fit, etc.).

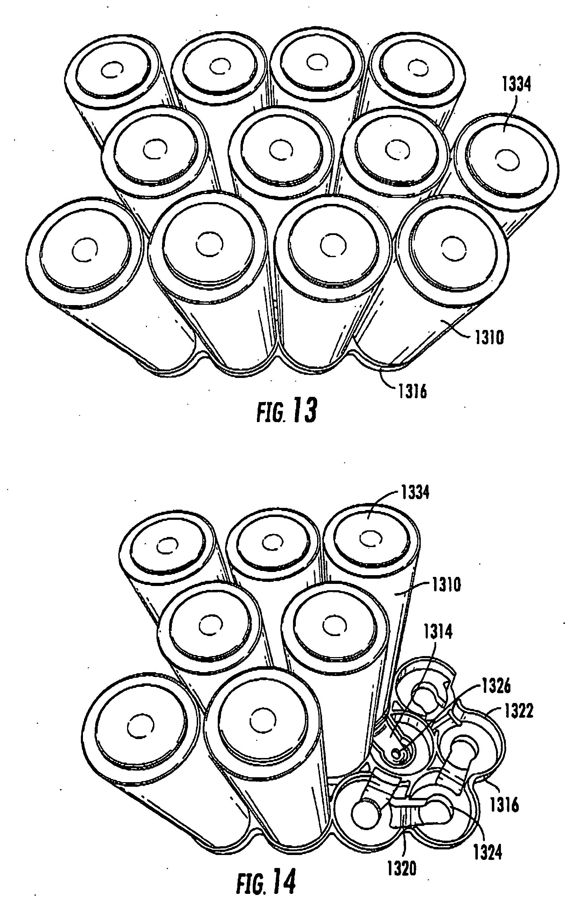

According to an exemplary embodiment, the upper tray 1316 comprises features 1320 (e.g., raised portions, cutouts, channels, spaces, molded areas, etc.) that receive the integral bus bars 1314 of the individual cells 1310 to properly orientate or align the cells 1310 (and the integral bus bars 1314) so that the bus bars 1314 are properly aligned to be connected to an adjacent cell 1310. The upper tray 1316 also comprises a feature shown as a wall 1322 (as shown, e.g., in FIG. 14) that partially surrounds the upper portion of the cell 1310 to aid in properly locating the cell 1310. It should be noted that the bus bars 1314 used in connection with the upper tray 1316 need not be integral with the lid 1312 (i.e., the upper tray 1316 will still be able to properly align and orientate cells 1310 having non-integral bus bars 1314).

According to another exemplary embodiment, the upper tray 1316 also comprises openings or apertures 1324 that expose a portion of the bus bar 1314 (e.g., the end of the bus bar 1314 having an aperture 1326) to be coupled (e.g., with a fastener, by welding, etc.) to a terminal 1328 of an adjacent cell 1310. According to an exemplary embodiment, the terminal 1328 of the adjacent cell 1310 is threaded (e.g., to receive a fastener 1329, as shown in FIG 22). According to another exemplary embodiment, the terminal 1328 of the adjacent cell 1310 may be flat so that the terminal 1328 may be welded to the bus bar 1314. The upper tray 1316 may be made of a polymer (e.g., polypropylene, polyethylene, etc.) or any other suitable material (e.g., insulative material).

Still referring to FIG. 11, the battery module 1300 is shown to include a seal 1330 provided along an upper surface of the lower tray 1318 in order to seal a chamber (not shown) located inside the lower tray 1318. According to an exemplary embodiment, the seal 1330 is configured to seal the gap between the lower portion of the cells 1310 and the lower tray 1318 (when the cells 1310 are placed in the lower tray 1318). According to an exemplary embodiment, the seal 1330 may be constructed from silicone (e.g., molded silicone) or other appropriate material.

According to an exemplary embodiment, the seal 1330 is configured to aid in containing any gases that are vented from the cells 1310 into the chamber. For example, gases may be vented from the cells 1310 via a vent device or vent feature 1334 located at the lower end of each of the cells 1310 (shown, e.g., in FIGS. 13-14). According to another exemplary embodiment, an opening or outlet 1336 (e.g., as shown in FIG. 11) may be provided in fluid connection with the chamber. The outlet 1336 may be used to direct gases from the chamber (after having been vented from the cells 1310) to outside the battery module 1300 (e.g., outside the vehicle).

Referring now to FIG. 12, the battery module 1300 is shown with the upper tray 1316 removed. As can be seen in FIG. 12, the bus bars 1314 of the cells 1310 are properly oriented so that they are ready for connection to a terminal 1328 of an adjacent cell 1310 (or for connection to another module 1300 or other component of the battery system). According to another exemplary embodiment, the battery module 1300 may also include an aperture or hole shown as fill hole 1332 in the lid 1312 of the cell 1310. The fill hole 1332 allows a substance (e.g., an electrolyte) to enter the cell 1310.

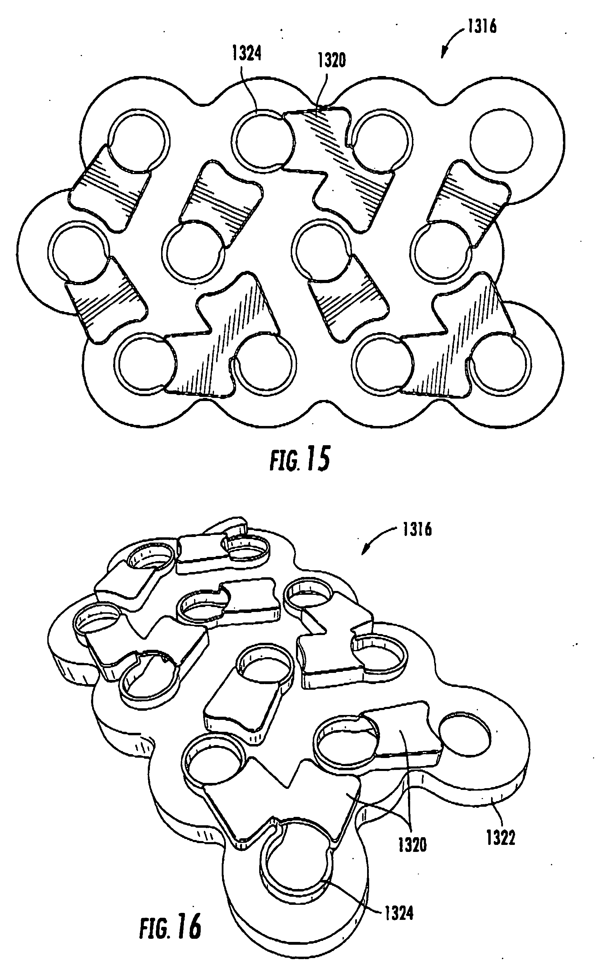

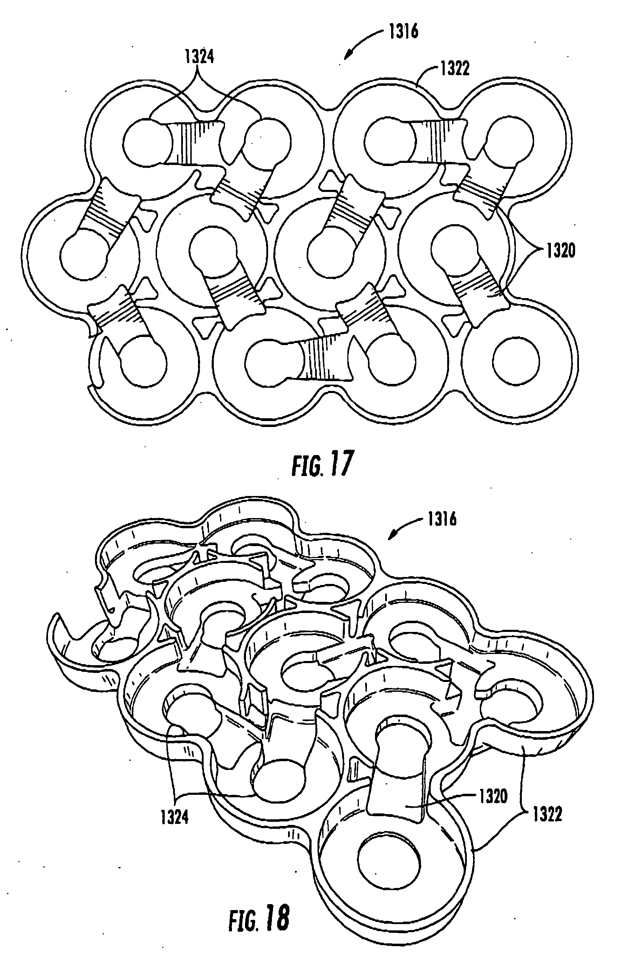

As shown in FIGS. 13-18, the upper tray 1316 may be used as an assembly tool or fixture according to an exemplary embodiment. As can be seen in FIGS. 13-14, the cells 1310 having the integral bus bars 1314 are provided in the upper tray 1316 (which is provided upside down). The alignment features 1324 (shown as depressions in FIGS. 14, and 17-18) provided in the upper tray 1316 provide for an assembly/fixturing tool for properly aligning and orientating the individual cells 1310 into place when assembling the module 1300. Utilizing the upper tray 1316 as an assembly tool saves time, energy, and money in assembling the battery module 1300. As noted above, the bus bars 1314 used in connection with the upper tray 1316 need not be integral with the lid 1312 (i.e., the upper tray 1316 will still be able to properly align and orientate cells 1310 having non-integral bus bars 1314).

The cells 1310 (having either an integral bus bar 1314 or a separate bus bar coupled to the lid 1312) are provided upside down into the upper tray 1316 (i.e., the end of the cell 1310 having the lid 1312 and bus bar 1314 are placed into the upper tray 1316). The bus bar 1314 of each individual cell 1310 will be aligned for proper coupling with the terminal 1328 of another cell 1310 (or to other components of the battery module 1300 or battery system). Additionally, the wall features 1322 of the upper tray 1316 may aid in properly locating the individual cells 1310.

Once all of the cells 1310 are properly located in the upper tray 1316, the bottom tray 1318 is assembled to the cells 1310 (again, upside down). The bottom tray 1318 may have a seal 1330 provided on it to seal the lower end of the cells 1310 (as shown in FIG. 11). The battery module 1300 is then turned right side up where the bus bars 1314 are then coupled to their respective terminal 1328 (e.g., by a fastener, by welding, etc.).

According to one exemplary embodiment, a battery module includes a plurality of electrochemical cells provided in between a bottom tray and an upper tray. The electrochemical cells may include a housing having a tubular main body, a bottom, and a lid. The bottom may include a vent feature to allow venting of gases and/or effluent from inside the housing. The lid may include a first terminal that is insulated from the lid and a bus bar that is integral to the lid. The integral bus bar may serve as a second terminal of the cell. The battery module may also include a seal provided between the lower end of the cell and the lower tray to seal a chamber configured to receive vented gases from the cells. The upper tray may include features and/or cutouts to help properly align and orientate the cells having integral bus bars.

According to another exemplary embodiment, the battery module includes a plurality of electrochemical cells provided in between a first structure and a second structure. Each of the electrochemical cells includes a feature extending from a top of the electrochemical cells, the feature configured to electrically couple the electrochemical cell to a terminal of an adjacent electrochemical cell or other component of the battery module. The first structure includes features to properly orientate each of the electrochemical cells.

According to another exemplary embodiment, a method of assembling a battery module includes providing a plurality of electrochemical cells in a first structure. Each of the plurality of electrochemical cells has a lid having an integral bus bar. The first structure has features to properly orientate the integral bus bars of each of the plurality of electrochemical cells. The method further includes providing a second structure over the ends of the electrochemical cells.

One advantageous feature of providing terminals that are integrally formed with a cover, lid, or container for a battery or cell is that the need to separately manufacture and couple the terminal to the cover, lid, or container is eliminated. In this manner, labor and manufacturing costs may be reduced as compared to other cells in which terminals are separately manufactured from the lid, cover, or container (e.g., by eliminating steps in the manufacturing operation). Additionally, providing terminals that are integrally formed reduces the opportunity for failure modes to take effect (e.g., because the terminal is not welded to the cover or container, there is not a weld point which may be a point of electrical shorting or failure).

Those reviewing this disclosure will appreciate that various exemplary embodiments have been shown and described, and that according to various exemplary embodiments, features associated with one exemplary embodiment may be used with features included in other exemplary embodiments.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the battery module having electrochemical cells with integrally formed terminals as shown in the various exemplary embodiments is illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, the battery may be non-cylindrical (e.g., oval, rectangular, etc.), the position of elements may be reversed or otherwise varied (e.g., orientation of terminals), and the battery could be a number of different of types (e.g., nickel metal hydride, lithium ion, lithium polymer, etc.). Accordingly, all such modifications are intended to be included within the scope of the present claims. The order or sequence of any process or method steps may be varied or re-sequenced according ' to exemplary embodiments. Other substitutions, modifications, changes and omissions may be made in the design, operating conditions and arrangement of the various exemplary embodiments without departing from the scope of the present claims.

## Claims

1. A battery module (1300) comprising:
a plurality of electrochemical cells (1110, 1210, 1310), each of the cells (1110, 1210, 1310) comprising a housing (1136, 1212) having a longitudinal axis and a lid (1218, 1312) coupled to the housing (1136,1212), the lid (1218, 1312) comprising a member (1116, 1226, 1314) configured to act as a first terminal (1116, 1226, 1314) for the cell (1110, 1210, 1310), at least a portion of the member (1116, 1226, 1314) extending away from the housing (1136,1212) in a direction perpendicular to the longitudinal axis; and
a structure (1316) configured to receive the plurality of cells (1110, 1210, 1310) on first side of the structure (1316), the first side of the structure (1316) comprising a plurality of depressions (1320), each of the plurality of depressions (1320) configured to receive at least a portion of the member (1116, 1226, 1314) such that the member (1116, 1226, 1314) is properly aligned for conductive coupling with a terminal (1112, 1222, 1328) of an adjacent cell (1110, 1210,1310).

2. The battery module (1300) of Claim 1, wherein each of the plurality of depressions (1320) at least partially surround the member (1116, 1226, 1314) to aid in electrically insulating the member (1116, 1226, 1314).

3. The battery module (1300) of Claim 1, wherein each of the plurality of depressions (1320) comprise a cutout (1324) to allow access to an aperture (1128, 1228, 1326) of the member (1116, 122 6, 1314).

4. The battery module (1300) of Claim 1, wherein the structure (1316) further comprises a plurality of wall features (1322) configured to aid in properly aligning the plurality of electrochemical cells (1110, 1210, 1310).

5. The battery module (1300) of Claim 4, wherein each of the plurality of wall features (1322) at least partially surrounds an end of each of the plurality of electrochemical cells (1110, 1210, 1310).

6. The battery module (1300) of Claim 1, wherein the member (1116, 1226, 1314) is integrally formed with the lid (1218, 1312).

7. The battery module (1300) of Claim 1, wherein each of the plurality of cells (1110, 1210, 1310) further comprise a second terminal (1112, 1222, 1328), wherein the first terminal (1116, 1226, 1314) of a first cell (1110, 1210, 1310) is conductively coupled to the second terminal (1112, 1222, 1328) of an adjacent cell (1110, 1210, 1310).

8. The battery module (1300) of Claim 7, wherein a surface of the first terminal (1116, 1226, 1314) is in facing engagement with a surface of the second terminal (1112, 1222, 1328) of the adjacent cell (1110, 1210, 1310) to electrically connect the first terminal (1116, 1226, 1314) with the second terminal (1112, 1222, 1328).

9. The battery module (1300) of any of Claims 1-6, wherein the lid (1318, 1312) includes an aperture (1234) through which a second terminal (1112, 1222, 1328) for the cell (1110, 1210, 1310) extends, wherein the second terminal (1112, 1222, 1328) is electrically isolated from the lid (1218, 1312).

10. The battery module (1300) of any of Claims 1-6, wherein a portion of the member (1116, 1226, 1314) is configured to be provided in contact with a surface of the terminal (1112, 1222, 1328) of the adjacent cell (1116, 1226, 1314).

11. The battery module (1300) of Claim 10, wherein the member (1116, 1226, 1314) includes an aperture (1128, 1228, 1326) and is configured to receive a fastener (1329) for coupling the member (1116, 1226, 1314) to the terminal (1112, 1222, 1328) of the adjacent cell (1116, 1226, 1314).

12. The battery module (1300) of Claim 1, wherein the structure (1316) comprises a polymeric material.

13. A method of producing the battery module (1300) of any of the preceding claims, comprising:
providing the structure (1316);
providing the plurality of electrochemical cells (1110,1210,1310) to the first side of the structure (1316) such that each of the plurality of depressions (1320) of the structure (1316) receive the member (1116,1226,1314) of each of the plurality of electrochemical cells (1110, 1210, 1310) such that the member (1116, 1226, 1314) is properly aligned for conductive coupling with a terminal (1112, 1222, 1328) of an adjacent cell (1110, 1210, 1310); and
coupling the member (1116, 1226, 1314) of one of the plurality of electrochemical cells (1110, 1210, 1310) to the terminal (1112, 1222, 1328) of the adjacent cell (1110, 1210, 1310).

14. The method of Claim 13, further comprising providing a second structure (1318) at an end of each of the plurality of electrochemical cells (1110, 1210, 1310) opposite the member (1116, 1226, 1314).

15. The method of Claim 14, further comprising providing a sealing member (1330) to the second structure (1318) and configured to seal the ends of each of the plurality of electrochemical cells (1110, 1210, 1310) opposite the members (1116, 1226, 1314).

## Patentansprüche

1. Ein Batteriemodul (1300) aufweisend:
- eine Vielzahl von elektrochemischen Zellen (1110, 1210, 1310), wobei jede der Zellen (1110, 1210,1310) ein Gehäuse (1136, 1212) aufweist, das eine Längsachse und eine mit dem Gehäuse (1136, 1212) gekoppelte Kappe (1218, 1312) aufweist, wobei die Kappe (1218, 1312) ein Element (1116, 1226, 1314) aufweist, das dazu eingerichtet ist, als erster Anschluss (1116, 1226, 1314) der Zelle (1110, 1210, 1310) zu fungieren, wobei wenigstens ein Teil des Elements (1116, 1216, 1314) sich von dem Gehäuse (1136, 1212) in einer zur Längsachse senkrechten Richtung forterstreckt; und
- eine Struktur (1316), die eingerichtet ist zum Aufnehmen der Vielzahl von Zellen (1110, 1210, 1310) auf einer ersten Seite der Struktur (1316), wobei die erste Seite der Struktur (1316) eine Vielzahl von Vertiefungen (1320) aufweist, wobei jede der Vielzahl von Vertiefungen (1320) dazu eingerichtet ist, wenigstens einen Teil des Elements (1116, 1226, 1314) aufzunehmen, sodass das Element (1116, 1226, 1314) für eine leitende Verbindung mit einem Anschluss (1112, 1222, 1328) einer benachbarten Zelle (1110, 1210, 1310) passend ausgerichtet ist.

2. Das Batteriemodul (1300) von Anspruch 1, wobei jede der Vielzahl von Vertiefungen (1320) wenigstens zum Teil das Element (1116, 1226, 1314) umgibt, um die elektrische Isolierung des Elements (1116, 1226, 1314) zu unterstützen.

3. Das Batteriemodul (1300) von Anspruch 1, wobei jede der Vielzahl von Vertiefungen (1320) einen Ausschnitt (1324) aufweist, um einen Zugang zu einer Öffnung (1128, 1228, 1326) des Elements (1116, 1226, 1314) zu ermöglichen.

4. Das Batteriemodul (1300) von Anspruch 1, wobei die Struktur (1316) ferner eine Vielzahl von Wandmerkmalen (1322) aufweist, die dazu eingerichtet sind, eine passende Ausrichtung der Vielzahl der elektrochemischen Zellen (1110, 1210, 1310) zu unterstützen.

5. Das Batteriemodul (1300) von Anspruch 4, wobei jede der Vielzahl der Wandmerkmale (1322) wenigstens teilweise ein Ende jeder der Vielzahl der elektrochemischen Zellen (1110, 1210, 1310) umgibt.

6. Das Batteriemodul (1300) von Anspruch 1, wobei das Element (1116, 1226, 1314) integral mit der Kappe (1218, 1312) ausgebildet ist.

7. Das Batteriemodul (1300) von Anspruch 1, wobei jede der Vielzahl von Zellen (1110, 1210, 1310) ferner einen zweiten Anschluss (1112, 1222, 1328) aufweist, wobei der erste Anschluss (1116, 1226, 1314) einer ersten Zelle (1110. 1210, 1310) leitend mit einem zweiten Anschluss (1112, 1222, 1328) einer benachbarten Zelle (1110, 1210, 1310) verbunden ist.

8. Das Batteriemodul (1300) von Anspruch 7, wobei eine Oberfläche des ersten Anschlusses (1116, 1226, 1314) mit einer gegenüberliegenden Oberfläche des zweiten Anschlusses (1112, 1222, 1328) der benachbarten Zelle (1110, 1210, 1310) zur elektrischen Verbindung des ersten Anschlusses (1116, 1226, 1314) mit dem zweiten Anschluss (1112, 1222, 1328) im Eingriff steht.

9. Das Batteriemodul (1300) von einem der Ansprüche 1 bis 6, wobei die Kappe (1318, 1312) eine Öffnung (1234) beinhaltet, durch die sich ein zweiter Anschluss (1112, 1222, 1328) für die Zelle (1110, 1210, 1310) erstreckt, wobei der zweite Anschluss (1112, 1222, 1328) elektrisch gegenüber der Kappe (1218, 1312) isoliert ist.

10. Das Batteriemodul (1300) von einem der Ansprüche 1 bis 6, wobei ein Teil des Elements (1116, 1226, 1314) dazu eingerichtet ist, in Kontakt mit einer Oberfläche des Anschlusses (1112, 1222, 1328) der benachbarten Zelle (1116, 1226, 1314) gebracht zu werden.

11. Das Batteriemodul (1300) von Anspruch 10, wobei das Element (1116, 1226, 1314) eine Öffnung (1128, 1228, 1326) beinhaltet und dazu eingerichtet ist, ein Befestigungsmittel (1329) zum Koppeln des Elements (1116, 1226, 1314) an den Anschluss (1112, 1222, 1328) der benachbarten Zelle (1116, 1226, 1314) aufzunehmen.

12. Das Batteriemodul (1300) von Anspruch 1, wobei die Struktur (1316) ein Polymermaterial aufweist.

13. Ein Verfahren zum Herstellen des Batteriemoduls (1300) von einem der vorhergehenden Ansprüche, aufweisend:
- Bereitstellen der Struktur (1316);
- Bereitstellen der Vielzahl von elektrochemischen Zellen (1110, 1210, 1310) an der ersten Seite der Struktur (1316), sodass jede der Vielzahl von Vertiefungen (1320) der Struktur (1316) das Element (1116, 1226, 1314) von jeder der Vielzahl von elektrochemischen Zellen (1110, 1210, 1310) aufnimmt, sodass das Element (1116, 1226, 1314) für eine leitende Verbindung mit dem Anschluss (1112, 1222, 1328) einer benachbarten Zelle (1110, 1210, 1310) passend ausgerichtet ist; und
- Verbinden des Elements (1116, 1226, 1314) von einer der Vielzahl der elektrochemischen Zellen (1110, 1210, 1310) mit dem Anschluss (1112, 1222, 1328) der benachbarten Zelle (1110, 1210, 1310).

14. Das Verfahren von Anspruch 13, weiter aufweisend das Bereitstellen einer zweiten Struktur (1318) an einem dem Element (1116, 1226, 1314) gegenüberliegenden Ende von jeder der Vielzahl von elektrochemischen Zellen (1110, 1210, 1310).

15. Das Verfahren von Anspruch 14, weiter aufweisend das Bereitstellen eines Dichtungselements (1330) an der zweiten Struktur (1318), eingerichtet zum Dichten der den Elementen (1116, 1226, 1314) gegenüberliegenden Enden von jeder der Vielzahl der elektrochemischen Zellen (1110, 1210, 1310).

## Revendications

1. Module de batterie (1300) comprenant :
plusieurs cellules électrochimiques (1110, 1210, 1310), chacune des cellules (1110, 1210, 1310) comprenant un logement (1136, 1212) qui présente un axe longitudinal et un couvercle (1218, 1312) raccordé au logement (1136, 1212),
le couvercle (1218, 1312) comprenant un élément (1116, 1226, 1314) configuré pour servir de première borne de raccordement (1116, 1226, 1314) pour la cellule (1110, 1210, 1310), au moins une partie de l'élément (1116, 1226, 1314) s'étendant au-delà du logement (1136, 1212) dans une direction perpendiculaire à l'axe longitudinal et
une structure (1316) configurée pour recevoir plusieurs des cellules (1110, 1210, 1310) sur un premier côté de la structure (1316),
le premier côté de la structure (1316) comprenant plusieurs creux (1320),
chacun des différents creux (1320) étant configuré pour recevoir au moins une partie de l'élément (1116, 1226, 1314) de manière à ce que l'élément (1116, 1226, 1314) soit correctement aligné pour permettre un raccordement conducteur avec une borne de raccordement (1112, 1222, 1328) d'une cellule adjacente (1110, 1210, 1310).

2. Module de batterie (1300) selon la revendication 1, dans lequel chacun des différents creux (1320) entoure au moins partiellement l'élément (1116, 1226, 1314) pour contribuer à l'isolation électrique de l'élément (1116, 1226, 1314).

3. Module de batterie (1300) selon la revendication 1, dans lequel chacun des différents creux (1320) comprend un coupe-circuit (1324) qui permet un accès à une ouverture (1128, 1228, 1326) de l'élément (1116, 1226, 1314).

4. Module de batterie (1300) selon la revendication 1, dans lequel la structure (1316) comprend de plus plusieurs éléments de paroi (1322) configurés pour contribuer à un alignement correct des différentes cellules électrochimiques (1110, 1210, 1310).

5. Module de batterie (1300) selon la revendication 4, dans lequel chacun des différents éléments de paroi (1322) entoure au moins partiellement une extrémité de chacune des différentes cellules électrochimiques (1110, 1210, 1310).

6. Module de batterie (1300) selon la revendication 1, dans lequel l'élément (1116, 1226, 1314) est formé d'un seul tenant avec le couvercle (1218, 1312).

7. Module de batterie (1300) selon la revendication 1, dans lequel chacune desdites différentes cellules (1110, 1210, 1310) comprend de plus une deuxième borne de raccordement (1112, 1222, 1328), dans lequel la première borne de raccordement (1116, 1226, 1314) d'une première cellule (1110, 1210, 1310) est raccordée électriquement à la deuxième borne de raccordement (1112, 1222, 1328) d'une cellule adjacente (1110, 1210, 1310).

8. Module de batterie (1300) selon la revendication 7, dans lequel une surface de la première borne de raccordement (1116, 1226, 1314) engage frontalement une surface de la deuxième borne de raccordement (1112, 1222, 1328) de la cellule adjacente (1110, 1210, 1310) pour raccorder électriquement la première borne de raccordement (1116, 1226, 1314) à la deuxième borne de raccordement (1112, 1222, 1328).

9. Module de batterie (1300) selon l'une quelconque des revendications 1 à 6, dans lequel le couvercle (1318, 1312) comprend une ouverture (1234) traversée par une deuxième borne de raccordement (1112, 1222, 1328) de la cellule (1110, 1210, 1310), la deuxième borne de raccordement (1112, 1212, 1328) étant isolée électriquement du couvercle (1218, 1312).

10. Module de batterie (1300) selon l'une quelconque des revendications 1 à 6, dans lequel une partie de l'élément (1116, 1226, 1314) est configurée pour être mise en contact avec une surface de la borne de raccordement (1112, 1222, 1328) de la cellule adjacente (1116, 1226, 1314).

11. Module de batterie (1300) selon la revendication 10, dans lequel l'élément (1116, 1226, 1314) comprend une ouverture (1128, 1228, 1326) et est configuré pour recevoir une agrafe (1329) qui raccorde l'élément (1116, 1226, 1314) à la borne de raccordement (1112, 1222, 1328) de la cellule adjacente (1116, 1226, 1314).

12. Module de batterie (1300) selon la revendication 1, dans lequel la structure (1316) contient un matériau polymère.

13. Procédé de production d'un module de batterie (1300) selon l'une quelconque des revendications précédentes, comprenant les étapes qui consistent à :
prévoir la structure (1316),
prévoir les différentes cellules électrochimiques (1110, 1210, 1310) sur le premier côté de la structure (1316) de manière à ce que chacun des différents creux (1320) de la structure (1316) reçoive l'élément (1116, 1226, 1314) de chacune des différentes cellules électrochimiques (1110, 1210, 1310) de telle sorte que l'élément (1116, 1226, 1314) soit correctement aligné pour un raccordement conducteur avec une borne de raccordement (1112, 1222, 1328) d'une cellule adjacente (1110, 1210, 1310) et
raccorder l'élément (1116, 1226, 1324) d'une des différentes cellules électrochimiques (1110, 1210, 1310) à la borne de raccordement (1112, 1222, 1328) de la cellule adjacente (1110, 1210, 1310).

14. Procédé selon la revendication 13, comprenant de plus l'étape qui consiste à prévoir une deuxième structure (1318) à une extrémité de chacune des différentes cellules électrochimiques (1110, 1210, 1310) opposée à l'élément (1116, 1226, 1314).

15. Procédé selon la revendication 14, comprenant de plus l'étape qui consiste à prévoir sur la deuxième structure (1318) un élément (1330) de fermeture hermétique et configuré pour fermer hermétiquement les extrémités de chacune des différentes cellules électrochimiques (1110, 1210, 1310) opposées aux éléments (1116, 1226, 1314).
